# EUROPEAN PATENT SPECIFICATION

(11) **EP 1 996 830 B1**
(45) Date of publication and mention of the grant of the patent: **27.07.2011**
(21) Application number: 07716073.7
(22) Date of filing: 16.03.2007
(51) Int. Cl.: F16F 9/084, F16F 9/42

(54) **DAMPER DEVICE AND MANUFACTURE OF SUCH A DAMPER DEVICE**
DÄMPFUNGSVORRICHTUNG UND HERSTELLUNG SOLCH EINER DÄMPFUNGSVORRICHTUNG
DISPOSITIF AMORTISSEUR ET FABRICATION D'UN TEL DISPOSITIF AMORTISSEUR

(30) Priority: 20.03.2006 SE 0600629
(43) Date of publication of application: 03.12.2008
(73) Proprietor: ÖHLINS RACING AB, 194 27 Upplands Väsby (SE)
(72) Inventor: NYGREN, Nils-Göran, S-141 40 Huddinge (SE)
(74) Representative: Loqvist, Gabriel Mathias
(86) International application number: PCT/SE2007/000262
(87) International publication number: WO 2007/108747

(56) References cited:
- CA-A- 565 074
- DE-A1- 2 446 643
- GB-A- 1 500 516
- US-A- 1 492 328
- US-A- 3 103 993
- US-A- 5 178 239
- US-A- 6 142 497

## Description

### Technical field

The invention relates to a damper device in the form of a shock absorber in which a piston acts in a damping medium in order to damp the movement between the wheels and chassis of a vehicle. The damper is intended for use under extreme ambient conditions including heat and dust, long strokes and high load stresses. The damper is extruded from a single body and comprises a damping chamber part, a valve housing part with adjustable valve devices and a pressurization reservoir, which pressurizes the damping medium in both the valve housing part and the damping chamber part. The three different parts are arranged parallel to one another and the internal volume of the valve housing is connected both to the pressurized interior of the pressurization reservoir and to both chambers of the damping chamber part, so that the damper always functions with a positive pressure in both the compression and the return chamber. The body has alternating, heat-conducting channels and fins on its outer surface. It is also pressurized on the low-pressure side of the piston, so that a positive pressure always prevails in the chamber when at minimum pressure. The flow resistance for the damping medium passing between the two damping chambers must be easily adjustable.

### Background of the invention

Vehicles used under extreme ambient conditions such as difficult terrain, heat and dust, place heavy demands on the shock absorbers. In order to be able to absorb a large amount of damping energy efficiently, the shock absorber must have a long stroke. Owing to the high damping forces, the damper must be able to withstand high load stresses. It must also have a good cooling capacity in order to rapidly dissipate the damping energy that is converted into heat under the movements of the damper. High damping forces result in large pressure falls over the piston, which increase the risk of cavitation. In cavitation, gas bubbles are formed in the damping medium, which can lead to a reduction in the damping forces.

Hitherto known dampers include US 3,103,993 A1, for example, which demonstrates a shock absorber with cooling flanges to increase the service life and to improve the functioning of the damper. The damper body comprises a single part with radial fins intended to increase the cooling area. Said damper body has four bored cavities, the first being the actual damping chamber, the second being used as a chamber for pressurizing the damper whilst handling the displacement generated by the piston rod and the temperature fluctuations caused by changes in volume, and the third and fourth chambers being adjustable ports that are used in order to carry the damping medium expelled by the solid piston from one damping chamber to the other. The damper described above lacks the facility for pressurizing the damping medium on both sides of the piston, which means that cavitation can easily occur when the damping medium flows through the flow-restricting third and fourth bores.

US 5,178,239 shows a damper manufactured from an extruded cylinder body, in which the extrusion comprises holes that are used to lead the damping medium between the compression and return chambers when the damper is subjected to a high-speed stroke. The extruded fins also increase the heat exchange with the surroundings. The piston which divides off the damping chamber functions in a tube arranged inside the extruded cylinder body. On the return side of the piston the damper is pressurized by a gas-filled rubber bladder. The problem with this solution is that the damper is not externally adjustable but has a fixed damping characteristic which can only be modified by dismantling the damper and changing the flow-damping shims in the piston. Pressurization of the damper also occurs on only one side of the piston, which can lead to cavitation problems.

Another example is disclosed in CA 565 074 A which corresponds to the preamble of claim 1 and describes a damping device which is manufactured from a single body.

### Summary of the invention

The invention is defined by the technical features set forth in claim 1 ; additional features of the invention are disclosed in the dependent product and method claims.

In order to obtain a compact, light and strong construction, the damper device is manufactured from a single part in which there are three throughholes extruded parallel to one another in the body of the damper device. These three holes may be of different dimensions and may be used as damper body, pressurization reservoir and valve housing. In order to create a large cooling area and a rigid construction, the extrusion also comprises axial cooling flanges in the outer part of the damper body.

Since the three parts, the damper body, the pressurization reservoir and the valve housing are parallel to one another, connecting ports can easily be arranged between the internal spaces of the different parts. Placing valve devices at either end of the valve housing part and connecting the space between these to the pressurized space in the pressurization reservoir creates a damper which always functions with a positive pressure in both the compression and the return chamber. Because a positive pressure build-up prevails, cavitation can be avoided whilst the damping force characteristic in both stroke directions can be adjusted quite separately and independently of one another via the external adjustments.

The valve devices are located concentrically apart at either end of the valve housing part. This location of the valve devices facilitates the transport of damping medium between the two damping chambers and allows an easy external adjustment of these. Valve devices of identical design can be used for compression and return damping.

Locating the valve devices close to the compression and return chambers makes it possible to create large port areas, which means that the flow resistance of the damping medium to and from the valves is minimized.

The valve devices comprise an external high-speed adjustment and an external low-speed adjustment. This means that one of these two adjustments influences the pressure fall under large flows (high piston rod speeds) and the other influences the pressure fall primarily under small flows (low piston rod speeds). The first adjustable restrictor, i.e. the high-speed adjustment, is adjusted by a screw device on which a spring holder is mounted, the position of the spring holder determining the spring tension on the valve cone. The other adjustable restrictor, i.e. the low-speed adjustment, is adjusted via a valve which functions as a needle valve in which the through-flow area is determined by the position of the needle. This restrictor is therefore entirely static.

This valve construction in which the cone and the spring are located inside the valve seat simplifies the machining and affords lower product manufacturing costs. This is because the valve seat is relatively sunken and no machining of the valve is required inside the valve seat space.

### Description of the drawings

The invention will be described in more detail below, with reference to the drawings attached, in which:
Fig. 1 shows the damper schematically, clamped in a vehicle.
Fig. 1a shows a plan view of the damper.
Fig. 1b shows a view of the damper from below.
Fig. 2 shows the damper in cross section along the section line A-A.
Fig. 3 shows a detailed view of one of the valves.

### Detailed description of the invention

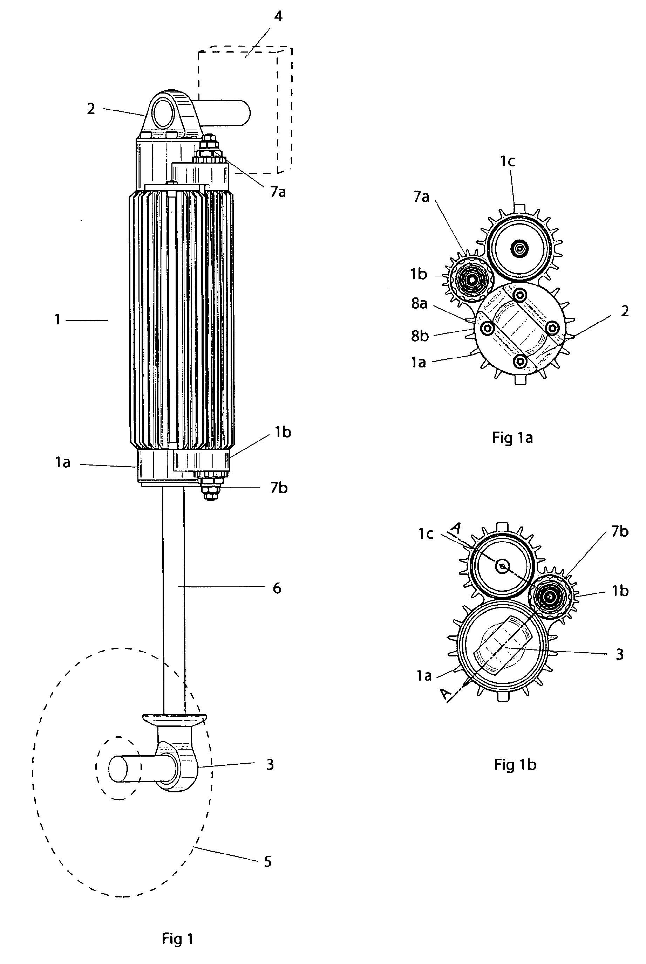

Fig. 1 shows a damper device comprising a body 1, the upper top eye 2 of which is fixed to a part of a vehicle chassis 4 and the lower end eye 3 of which is fixed to a wheel mounting 5. The mounting on the chassis 4 and the wheel mounting 5 are shown only schematically in the drawing but more than one damper can naturally be used for each wheel, in conjunction with most suitable types of known wheel suspension arrangements, provided that there is sufficient space. This damper device is preferably used together with a spring element, such as a leaf spring or a coil spring. The coil spring is commonly placed around another supplementary shock absorber.

The lower end eye 3 is fitted to a piston rod 6, which under relative movements between the chassis 4 and the wheel moves in and out of the damper body 1a. Also visible in Fig. 1 are the valve devices 7a, 7b, which are mounted in line, apart from one another at either end of a valve housing part 1b.

Fig. 1a shows a plan view of the damper, in which the three parts of the body 1, the damper body 1 a, the valve housing 1b and the pressurization reservoir 1 c can be clearly seen. The three parts 1 a, 1b, 1 c are arranged in cavities connected by common walls, that is to say the body 1 is manufactured from a single part. The part is preferably a light-weight profile having good thermal conduction properties, such as an aluminum alloy, for example. The outer surface of the body 1 has alternating channels 8a and fins 8b. These channels 8a and fins 8b are preferably produced together with the internal through-cavities of the three parts 1a, 1b, 1c by extrusion of the basic part.

The channels 8a/ the fins 8b help to provided a larger overall external area, which increases the cooling surface in contact with the surroundings, and the walls of the body 1 can be made thinner, whilst maintaining the strength and rigidity in certain directions.

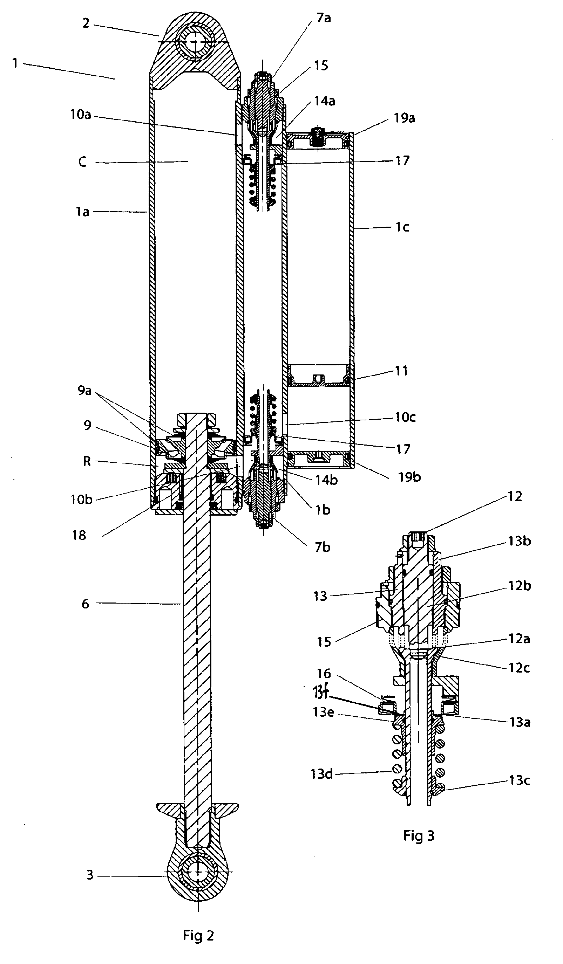

After extrusion, the body 1 is machined, for example so that the different parts 1a, 1b, 1c have different heights from one another, or take on a partially smooth outer surface. Threads and/or locking ring grooves can also be machined into the end parts of the through-cavities. Sealing parts can be fixed in these threads so that each cavity is defined in relation to the surroundings. See also Fig. 2 in which these sealing parts 18, 19a, 19b are shown more clearly. The part 18 therefore seals off the lower part of the damper body and the parts 19a, 19b define the interior of the pressurization reservoir 1 c in relation to the surroundings. The top eye 2 is also one such sealing part, which is firmly screwed into the damper body 1 a, as are also the valve devices 7a, 7b.

Fig. 1b shows the damper from below, a view which exposes the end eye 3 and the return valve device 7b. The centered location of the compression valve device 7a in the valve housing 1 b is shown in Fig. 1 a.

Fig. 2 shows the damper in cross section along the section line A-A. The damping chamber 1 a is divided into two damping chambers, a compression chamber C and a return chamber R, by a piston 9 which is mounted on the piston rod 6. Under the piston rod movements, the piston 9 moves so that the damping medium with which the damper device is filled is forced either through the piston valves, that is to say the gap that is created between the flexible shim washers 9a and the piston 9 or through ports 10a, 10b via the external, adjustable valve devices 7a, 7b out to the valve housing 1 b. From the valve housing 1b it returns to the damping chamber via the check valves 16.

The term check valve here refers to a valve which flows more in one direction. The difference in flow in the two directions is normally great, since the flow in one direction is often close to zero. In the main flow direction of the valve the pressure fall is usually significantly lower than in the valve system that generates the damping force. In certain cases, however, a pressure fall can be purposely built in, but it must be marginally lower than the set gas pressure in order to prevent cavitation. These check valves 16 ensure that the pressure in the damping chamber, whether it is the compression side C or the return side R, is always considerably high than the atmospheric pressure in the intended speed range of the damper. When the pressure in the C/R damping chamber in which the lowest pressure prevails drops to the pressure prevailing in pressurization reservoir 1 c, the check valve 16 coupled to this C/R chamber opens and pressurized damping medium is led into this chamber. The pressure in the low-pressure C/R chamber, the damping chamber which for the moment has the lowest pressure, is therefore always positive and is well above the atmospheric pressure, so that cavitation can therefore be avoided.

Were it not for the pressure fall that occurs in the ports and check valves, the pressure in the C/R low-pressure chamber would never be less than the pressure in the pressurization reservoir 1c. As a result of the changes in volume caused by the piston rod displacement, a certain proportion of the damping medium is also transported via a port 10c to/from the pressurization reservoir 1 c. The ports 10a, 10b connecting the internal volumes of the damping chamber 1a and valve housing 1b are arranged next to the two ends of the damping chamber, so that the damping medium has scope to flow into the internal volume of the valve housing 1b via the respective valve device 7a, 7b with the least possible loss of internal stroke.

The internal volume of the valve housing 1b always has a pressure close to the pressure prevailing in the pressurization reservoir, since a further port 10c connects this volume to the internal volume of the pressurization reservoir 1c.

The internal volume of the pressurization reservoir 1c may preferably be divided by a floating piston 11, which is acted upon by a pressure generated, for example, by a gas or a mechanical pressure member, such as a spring (not shown). The floating piston 11 can also be replaced by a pressurized rubber bladder or corresponding device for the pressurization of a medium.

Fig. 3 shows an enlarged view of one of the valve devices 7a, 7b. The valve device 7a, 7b comprises an external high-speed adjustment device 13 and an external low-speed adjustment device 12. This means that the valve devices 7a, 7b are so designed that both of the valves comprise an adjustment which influences the pressure fall in the case of large flows (high-speed adjustment) 13 and an adjustment which influences the pressure fall mainly in the case of small flows (low-speed adjustment) 12, in such a way that the damping medium flows through a first adjustable restrictor 13a when the relative movement of the damper is high and through a second adjustable restrictor 12a when the relative speed is low. The low-speed restrictor 12a also has an effect on the high-speed restrictor, albeit to a small degree in percentage terms. The first adjustable restrictor 13a, i.e. the high-speed adjustment, is adjusted via a screw device 13b, the position of which determines the relative distance between a spring holder 13c and a valve cone 13e. A spring 13d is arranged between the spring holder 13c and the valve cone 13e and the relative distance between the spring holder 13c and the valve cone 13e adjusts the force that is required in order to open the valve cone 13e, allowing the damping medium to pass through. The valve cone 13e bears against a valve seat 13f when it is closed. A check valve 16 opens as soon as the pressure inside the valve housing 1 b, which owing to the connecting port 10c is equal to the pressure in the pressure reservoir, has a pressure greater than in the respective C/R damping chamber. The other adjustable restrictor 12, i.e. the low-speed adjustment, is adjusted via a valve 12b which functions as a needle valve in which the through-flow area 12a is determined by the position of the needle against the seat 12c. The seat 12c is arranged on a part of the high-speed adjustment device 13. Despite this, the setting of the respective valve is not changed by the adjustment. In addition, the compression damping can be adjusted without affecting the return damping and vice versa.

The valve seat 13f, being the seat for the valve cone 13e on one side and the seat for the check valve 16 on the other, bears against a heel 17 turned in the inner surface of the valve housing. The fact that the spring 13d is arranged in the internal volume of the valve housing inside the valve seat, rather than on top of the valve seat, as in previously known valves, means that this machining of the heel 17 can be carried out with a shorter tool protrusion than hitherto. This valve design construction therefore simplifies the machining, making the product cheaper to manufacture.

The damper device in Fig. 2 functions as follows. The pressure fall created over the piston 9 as a result of an externally acting force causes the damping medium to flow via the flow-restricting shims 9a and the valve device 7a, 7b to the other side of the piston 9. All valves generating a damping force, in both valve movement directions, comprising shim washers 9a on the main piston, an externally adjustable low-speed valve 12 and an externally adjustable high-speed valve 13, are connected in parallel, that is to say the flow resistance through the valves divides the flow of damping medium between the different valves. The damping medium that does not pass through the valve in the piston 9 flows into a space 14a, 14b between the valve cone 13e and a sealing part 15 forming a seal between the valve and the surroundings. Depending on the rate of flow and the adjustment setting, the damping medium flows through the restrictor 12a and/or 13a on into the internal volume of the valve housing 1b.

Since the internal volume of the valve housing 1b is connected to the pressurized space in the pressurization reservoir 1 c via the port 10c, the same pressure prevails in both volumes. When this pressure is greater than the pressure in any of the C/R damping chambers, the check valve 16 is opened and pressurized damping medium flows into the C/R chamber where the lowest pressure prevails.

Since both of the valve devices 7a, 7b function in the same way, identical valves can be used for both the compression and the return stroke, but adjustment of the flows in both directions can be performed independently of one another.

## Claims

1. A damper device (1) for damping movement between wheel and chassis of a vehicle, said damper device being arranged to be filled with a damping medium in which the device is manufactured from a single body (1) and comprises a damping chamber part (1a), the internal volume of which is divided into a compression chamber (C) and a return chamber (R) by a piston (9) fixed to a piston rod (6), a valve housing part (1b) with valve devices (7a, 7b) arranged at either end of the valve housing part (1b) and a pressurization reservoir (1c), the internal volume of which is divided off by a member (11), which is acted upon by a pressure which pressurizes the damping medium in the device (1), wherein the three different parts (1a, 1b, 1c) are arranged parallel to one another and the internal volume of the valve housing (1b) is connected both to the pressurized interior of the pressurization reservoir (1c) and, via the valve devices (7a, 7b), to both chambers (C, R) of the damping chamber part (1a), **characterized in that** the valve devices (7a, 7b) are adjustable, and **in that** the valve devices (7a, 7b) are so designed that both of the valves comprise an adjustment which influences the pressure fall in the case of large flows (13) and an adjustment which influences the pressure fall mainly in the case of small flows (12).

2. The damper device (1) as claimed in claim 1, **characterized in that** the outer surface of the body (1) has alternating channels (8a) and fins (8b) or corresponding longitudinal structures which increase the surface of the damper device (1) exposed to the surroundings.

3. The damper device as claimed in claim 1 or 2, **characterized in that** the valve devices (7a, 7b) comprise an external high-speed adjustment device (13) and an external low-speed adjustment device (12).

4. The damper device as claimed in any of the preceding claims **characterized in that** the valve devices (7a, 7b) comprise a first adjustable restrictor (13a) and a second adjustable restrictor (12a) for adjusting the flow at high and low damping speeds respectively.

5. The damper device as claimed in any one of the preceding claims, **characterized in that** a check valve (16), which bears against a valve seat (13f), opens and connects the interior of The valve housing (1b) to the (C/R) damping chamber as soon as the pressure inside the valve housing (1b) is greater than in the respective (C/R) damping chamber.

6. The damper device as claimed in claim 4 or 5, **characterized in that** the first adjustable restrictor (13a), i.e. the high-speed adjustment, is adjusted via a screw device (13b), the position of which determines the relative distance between a spring holder (13c) and a valve cone (13e), a spring (13d) being arranged between the spring holder (13c) and the valve cone (13e) and the relative distance between the spring holder (13c) and valve cone (13e) adjusting the force that is required in order to open the valve cone (13e) and allowing the damping medium to pass.

7. The damper device as claimed in claim 4, 5 or 6, **characterized in that that** the second adjustable restrictor (12), i.e. the low-speed adjustment, which also to a certain extent has an effect on the restrictor for high piston rod speeds, is adjusted via a valve (12b) which functions as a needle valve in which the through-flow area (12a) is determined by the position of the needle against the seat (12c).

8. The damper device as claimed in any one of the preceding claims, **characterized in that** the valve seat (13f) bears against a heel (17) turned in the inner surface of the valve housing (b).

9. Manufacture of a damper device (1) as claimed in any one of the preceding claims, wherein the three parts of the device, the damping chamber (1a), the valve housing (1b) and the pressurization reservoir (1c), are arranged in through-cavities extruded from a single part and arranged parallel to one another in this part, **characterized in that** after extrusion, ports (10a, 10b, 10c) are made between the cavities containing the damping chamber (1 a) and the valve housing (1b) and between the valve housing (1b) and the pressurization reservoir (1c).

10. The manufacture of a damper device as claimed in claim 9, **characterized in that** both the three cavities adapted to the parts (1 a, 1b, 1 c) and alternating channels (8a) and fins (8b) or corresponding longitudinal structures in the outer surface of the damper device (1) are produced in one and the same step in the extrusion process.

11. The manufacture of a damper device as claimed in claim 9 or 10, **characterized in that** threads and/or locking ring grooves are machined into the end parts of the through-cavities, in which sealing parts (2, 7a, 7b, 18, 19a, 19) are fixed so that each cavity is defined in relation to the surroundings.

12. The manufacture of a damper device as claimed in claim 11, **characterized in that** the cavity designed to be used as valve housing (1b) is sealed at both ends of the valve devices (7a, 7b)

## Patentansprüche

1. Dämpfungsvorrichtung (1) zum Dämpfen der Bewegung zwischen dem Rad und dem Chassis eines Fahrzeugs, wobei die Dämpfungsvorrichtung zum Füllen mit einem Dämpfungsmedium angeordnet ist, wobei die Vorrichtung aus einem einzelnen Körper (1) gefertigt ist und einen Dämpfungskammerteil (1 a), dessen Innenvolumen durch einen an einer Kolbenstange (6) befestigten Kolben (9) in eine Druckkammer (C) und eine Rückführkammer (R) unterteilt ist, ein Ventilgehäuseteil (1 b) mit Ventilvorrichtungen (7a, 7b), die an jedem Ende des Ventilgehäuseteils (1 b) angeordnet sind, und einen Druckbehälter (1 c) aufweist, dessen Innenvolumen durch ein Element (11) abgeteilt ist, das von einem das Dämpfungsmedium in der Vorrichtung (1) unter Druck setzenden Druck beaufschlagt wird, wobei die drei verschiedenen Teile (1 a, 1 b, 1 c) parallel zueinander angeordnet sind und das Innenvolumen des Ventilgehäuses (1 b) sowohl mit dem unter Druck gesetzten Inneren des Druckbehälters (1 c) als auch, über die Ventilvorrichtungen (7a, 7b), mit beiden Kammern (C, R) des Dämpfungskammerteils (1 a) verbunden sind, **dadurch gekennzeichnet, dass** die Ventilvorrichtungen (7a, 7b) einstellbar sind und dass die Ventilvorrichtungen (7a, 7b) so gestaltet sind, dass beide Ventile eine Einstellung, die bei großen Strömungen den Druckabfall (13) beeinflusst, und eine Einstellung, die in erster Linie bei kleinen Strömungen (12) den Druckabfall beinflusst, aufweisen.

2. Dämpfungsvorrichtung (1) nach Anspruch 1, **dadurch gekennzeichnet, dass** die Außenfläche des Körpers (1) abwechselnd Kanäle (8a) und Rippen (8b) oder entsprechende Längsstrukturen aufweist, die die der Umgebung ausgesetzte Oberfläche der Dämpfungsvorrichtung (1) vergrößert.

3. Dämpfungsvorrichtung nach Anspruch 1 oder 2, **dadurch gekennzeichnet, dass** die Ventilvorrichtungen (7a, 7b) eine externe Hochgeschwindigkeits-Einstellungsvorrichtung (13) und eine externe Niedriggeschwindigkeits-Einstellungsvorrichtung (12) aufweisen.

4. Dämpfungsvorrichtung nach einem der vorhergehenden Ansprüche, **dadurch gekennzeichnet, dass** die Ventilvorrichtungen (7a, 7b) einen ersten einstellbaren Durchflussbegrenzer (13a) und einen zweiten einstellbaren Durchflussbegrenzer (12a) zum Einstellen des Durchflusses bei hohen bzw. niedrigen Dämpfungsgeschwindigkeiten aufweist.

5. Dämpfungsvorrichtung nach einem der vorhergehenden Ansprüche, **dadurch gekennzeichnet, dass** sich ein Rückschlagventil (16), das sich gegen einen Ventilsitz (13f) stützt, öffnet und das Innere des Ventilgehäuses (1 b) mit der (C/R)-Dämpfungskammer verbindet, sobald der Druck in dem Ventilgehäuse (1 b) größer ist als in der jeweiligen (C/R)-Dämpfungskammer.

6. Dämpfungsvorrichtung nach Anspruch 4 oder 5, **dadurch gekennzeichnet, dass** der erste einstellbare Durchflussbegrenzer (13a), d.h. die Hochgeschwindigkeitseinstellung, über eine Schraubvorrichtung (13b) eingestellt wird, deren Position den relativen Abstand zwischen einer Federhalterung (13c) und einem Ventilkegel (13e) bestimmt, wobei eine Feder (13d) zwischen der Federhalterung (13c) und dem Ventilkegel (13e) angeordnet ist und durch den relativen Abstand zwischen der Federhalterung (13c) und dem Ventilkegel (13e) die Kraft eingestellt wird, die erforderlich ist, um den Ventilkegel (13e) zu öffnen und den Durchfluss des Dämpfungsmediums zu ermöglichen.

7. Dämpfungsvorrichtung nach Anspruch 4, 5 oder 6, **dadurch gekennzeichnet, dass** der zweite einstellbare Durchflussbegrenzer (12), d.h. die Niedriggeschwindigkeitseinstellung, die sich zu einem gewissen Grad auch auf den Durchflussbegrenzer für hohe Kolbenstangengeschwindigkeiten auswirkt, über ein Ventil (12b) eingestellt wird, welches wie ein Nadelventil wirkt, in dem der Durchflussbereich (12a) durch die Position der Nadel gegen den Sitz (12c) bestimmt wird.

8. Dämpfungsvorrichtung nach einem der vorhergehenden Ansprüche, **dadurch gekennzeichnet, dass** sich der Ventilsitz (13f) gegen einen Absatz (17) abstützt, der in die Innenfläche des Ventilgehäuses (b) gedreht wurde.

9. Herstellung einer Dämpfungsvorrichtung (1) nach einem der vorhergehenden Ansprüche, wobei die drei Teile der Vorrichtung, die Dämpfungskammer (1 a), das Ventilgehäuse (1 b) und der Druckbehälter (1 c) in Durchgangshohlräumen angeordnet sind, die aus einem einzelnen Teil extrudiert wurden und in diesem Teil parallel zueinander angeordnet sind, **dadurch gekennzeichnet, dass** nach der Extrusion Öffnungen (10a, 10b, 10c) zwischen den die Dämpfungskammer (1 a) enthaltenden Hohlräumen und dem Ventilgehäuse (1b) und zwischen dem Ventilgehäuse (1 b) und dem Druckbehälter (1 c) gefertigt werden.

10. Herstellung einer Dämpfungsvorrichtung nach Anspruch 9, **dadurch gekennzeichnet, dass** sowohl die drei an die Teile (1 a, 1 b, 1 c) angepassten Hohlräume als auch die abwechselnden Kanäle (8a) und Rippen (8b) oder entsprechenden Längsstrukturen in der Außenfläche der Dämpfungsvorrichtung (1) in dem Extrusionsverfahren in ein und demselben Schritt hergestellt werden.

11. Herstellung einer Dämpfungsvorrichtung nach Anspruch 9 oder 10, **dadurch gekennzeichnet, dass** Gewinde und/oder Sicherungsringnuten in die Endteile der Durchgangshohlräume eingearbeitet werden, in denen Dichtungsteile (2, 7a, 7b, 18, 19a, 19) derart befestigt sind, dass jeder Hohlraum relativ zur Umgebung definiert ist.

12. Herstellung einer Dämpfungsvorrichtung nach Anspruch 11, **dadurch gekennzeichnet, dass** der als Ventilgehäuse (1 b) zu verwendende Hohlraum an beiden Seiten der Ventilvorrichtungen (7a, 7b) abgedichtet ist.

## Revendications

1. Dispositif amortisseur (1) pour amortir un mouvement entre une roue et un châssis d'un véhicule, ledit dispositif d'amortissement étant agencé de façon à être rempli avec un fluide d'amortissement, dans lequel le dispositif est fabriqué à partir d'un corps (1) unique et comprend une partie de chambre d'amortissement (1 a), le volume interne de laquelle est divisé en une chambre de compression (C) et une chambre de retour (R) par un piston (9) fixé à une tige (6) de piston, une partie de logement de soupape (1 b) avec des dispositifs de soupape (7a, 7b) agencés à chaque extrémité de la partie de logement de soupape (1 b) et un réservoir de pressurisation (1 c), le volume interne duquel est divisé par un élément (11), sur lequel il est agi par une pression qui pressurise le fluide d'amortissement dans le dispositif (1), dans lequel les trois parties différentes (1 a, 1 b, 1 c) sont agencées en parallèle les unes aux autres et le volume interne du logement de soupape (1 b) est raccordé à la fois à l'intérieur pressurisé du réservoir de pressurisation (1 c) et, par l'intermédiaire des dispositifs de soupape (7a, 7b), aux deux chambres (C, R) de la partie de chambre d'amortissement (1 a), **caractérisé en ce que** les dispositifs de soupape (7a, 7b) sont ajustables, et **en ce que** les dispositifs de soupape (7a, 7b) sont conçus de telle manière que les deux soupapes comprennent un ajustement qui influence la chute de pression dans le cas d'écoulements importants (13) et un ajustement qui influence la chute de pression essentiellement dans le cas de petits écoulements (12).

2. Dispositif amortisseur (1) selon la revendication 1, **caractérisé en ce que** la surface extérieure du corps (1) a des canaux (8a) et des ailettes (8b) alternés ou des structures longitudinales correspondantes qui augmentent la surface du dispositif amortisseur (1) exposée à l'environnement.

3. Dispositif amortisseur selon la revendication 1 ou 2, **caractérisé en ce que** les dispositifs de soupape (7a, 7b) comprennent un dispositif d'ajustement (13) haute vitesse externe et un dispositif d'ajustement (12) basse vitesse externe.

4. Dispositif amortisseur selon l'une quelconque des revendications précédentes, **caractérisé en ce que** les dispositifs de soupape (7a, 7b) comprennent un premier limiteur (13a) ajustable et un deuxième limiteur (12a) ajustable pour ajuster l'écoulement à haute et basse vitesse d'amortissement respectivement.

5. Dispositif amortisseur selon l'une quelconque des revendications précédentes, **caractérisé en ce qu'**un clapet anti-retour (16), qui porte contre un siège de soupape (13f), ouvre et raccorde l'intérieur du logement de soupape (1 b) sur les chambres d'amortissement (C/R) dès que la pression à l'intérieur du logement de soupape (1b) est supérieure à celle dans la chambre d'amortissement (C/R) respective.

6. Dispositif amortisseur selon la revendication 4 ou 5, **caractérisé en ce que** le premier limiteur (13a) ajustable, à savoir l'ajustement haute vitesse, est ajusté par l'intermédiaire d'un dispositif à vis (13b), la position duquel détermine la distance relative entre un porte-ressort (13c) et un cône de soupape (13e), un ressort (13d) étant agencé entre le porte-ressort (13c) et le cône de soupape (13e), et la distance relative entre le porte-ressort (13c) et le cône de soupape (13e) ajustant la force qui est nécessaire pour ouvrir le cône de soupape (13e) et laisser passer le fluide d'amortissement.

7. Dispositif amortisseur selon la revendication 4, 5 ou 6, **caractérisé en ce que** le deuxième limiteur (12) ajustable, à savoir l'ajustement basse vitesse, qui également dans une certaine mesure a un effet sur le limiteur pour des hautes vitesses de la tige de piston, est ajusté par l'intermédiaire d'une soupape (12b) qui fonctionne comme une soupape à aiguille dans laquelle la superficie d'écoulement (12a) est déterminée par la position de l'aiguille contre le siège (12c).

8. Dispositif amortisseur selon l'une quelconque des revendications précédentes, **caractérisé en ce que** le siège de soupape (13f) porte contre un talon (17) tourné dans la surface intérieure du logement de soupape (1 b).

9. Fabrication d'un dispositif amortisseur (1) selon l'une quelconque des revendications précédentes, dans laquelle les trois parties du dispositif, la chambre d'amortissement (1 a), le logement de soupape (1 b) et le réservoir de pressurisation (1 c), sont agencées dans des cavités traversantes extrudées à partir d'une pièce unique et agencées en parallèle les unes avec les autres dans cette partie, **caractérisée en ce qu'**après l'extrusion, des orifices (10a, 10b, 10c) sont constitués entre les cavités contenant la chambre d'amortissement (1a) et le logement de soupape (1 b) et entre le logement de soupape (1b) et le réservoir de pressurisation (1 c).

10. Fabrication d'un dispositif amortisseur selon la revendication 9, **caractérisée en ce que** les trois cavités adaptées aux parties (1 a, 1 b, 1 c) et aux canaux (8a) et ailettes (8b) alternés ou aux structures longitudinales correspondantes dans la surface extérieure du dispositif amortisseur (1) sont produites en une seule et même étape dans le processus d'extrusion.

11. Fabrication d'un dispositif amortisseur selon la revendication 9 ou 10, **caractérisée en ce que** des filets et/ou des rainures de bague de blocage sont usiné(e)s dans les parties d'extrémité des cavités traversantes, dans lesquelles des parties d'étanchéité (2, 7a, 7b, 18, 19a, 19) sont fixées de telle sorte que chaque cavité est définie par rapport à l'environnement.

12. Fabrication d'un dispositif amortisseur selon la revendication 11, **caractérisée en ce que** la cavité conçue pour être utilisée comme logement de soupape (1 b) est scellée aux deux extrémités des dispositifs de soupape (7a, 7b).
